# EUROPEAN PATENT SPECIFICATION

(11) **EP 1 443 629 B1**
(45) Date of publication and mention of the grant of the patent: **23.08.2006**
(21) Application number: 03257936.9
(22) Date of filing: 16.12.2003
(51) Int. Cl.: H02K 7/102

(54) **Motor**
Motor
Moteur

(30) Priority: 16.12.2002 CN 02287608
(43) Date of publication of application: 04.08.2004
(73) Proprietor: Positec Power Tools (Suzhou) Co., Ltd, Suzhou 215006 (CN)
(72) Inventor: Kening, Zou, Suzhou 215006 (CN); Zhao, Kong, Suzhou 215021 (CN)
(74) Representative: Stuttard, Garry Philip

(56) References cited:
- EP-A- 0 360 779
- EP-A- 0 964 501
- CH-A- 428 923
- FR-A- 1 351 349
- GB-A- 2 221 103
- US-A- 3 683 217

## Description

The present invention relates to an electric motor with an automatic braking device for braking after an interruption in power (eg power turn-off).

EP-A-0043498 discloses an electric motor comprising a stator, a rotor, a shaft disposed on the rotor, a braking disc on an outside end portion of the shaft, a friction sheet mounted on a side portion of a supporting bracket facing the braking disc, a spring provided between the supporting bracket and the fixed housing of the electric motor and a magnetic conducting body mounted on the stator and extending outwardly in the axial direction. When the power is turned-off, the supporting bracket is released and under the force of the spring, the friction sheet moves towards the braking disc so that the braking disc is stopped. This braking arrangement relies exclusively on the elastic force exerted by the spring to depress the friction sheet against the braking disc so it may take several minutes to stop the rotor after power turn-off. The braking effect of this arrangement is therefore largely unsatisfactory.

The present invention seeks to improve the braking effect of an electric motor after an interruption in power (eg power turn-off).

Thus viewed from one aspect the present invention provides an electric motor for automatic braking after an interruption in power comprising:
a housing,
a stator mounted within the housing,
a rotor mounted within the housing,
a shaft mounted on the rotor,
a braking disc mounted at or near to the end of the shaft,
a supporting bracket ringing the exterior of the shaft,
a friction sheet mounted on the upperside of the supporting bracket facing the braking disc,
a spring mounted between the supporting bracket and the housing,
a magnetic conducting body extending outwardly in an axial direction from the stator,
characterized in that the electric motor further comprises:
a first beveled surface on the underside of the supporting bracket and
a second beveled surface on the magnetic conducting body, wherein at least one incline of the first beveled surface and at least one incline of the second beveled surface are coincidental.

The electric motor of the present invention comprises a stator, a rotor, a shaft provided on the rotor and a braking disc mounted on the shaft. A supporting bracket rings the exterior of the shaft and a friction sheet is mounted on the upperside of the supporting bracket facing the braking disc. A spring is provided between the supporting bracket and the fixed housing of the electric motor. A magnetic conducting body extends outwardly in an axial direction from the stator. On the underside of the supporting bracket (preferably towards the end) is a first beveled surface. The magnetic conducting body comprises a second beveled surface, wherein the inclines of the first beveled surface and the second beveled surface are coincidental.

When power is on forming a closed magnetic circuit, the magnetic force exerted on the supporting bracket by the rotor overcomes the force of the spring. When power to the electric motor is interrupted or switched off, the supporting bracket moves towards and engages axially the braking disc under the force of the compressed spring. The tendency of the supporting bracket to rotate with the rotation of the braking disc together with the engagement of the inclines of the first and second beveled surfaces make the supporting bracket move further into axial engagement with the braking disc to rapidly stop the rotation of the braking disc and therefore the rotor.

In a preferred embodiment, an incline of the first beveled surface and an incline of the second beveled surface are (at least in part) upwardly coincidental in the direction of rotation.

In a preferred embodiment, the first beveled surface is the surface of a wedge-shaped body. Particularly preferably the wedge-shaped body is disposed at or near to the perimeter of the underside of the supporting bracket. Preferably the magnetic conducting body is provided with an opening and the wedge-shaped body lies within the opening, wherein the second beveled surface is an inverted wedge-shaped surface at the perimeter of the opening. The inverted wedge-shaped surface and the surface of the wedge-shaped body may be complementary.

In a preferred embodiment, the first beveled surface is the surface of a twin wedge-shaped body. The twin wedge-shaped body has twin inclined surfaces. Particularly preferably the twin wedge-shaped body is disposed at or near to the perimeter of the underside of the supporting bracket. Preferably the magnetic conducting body is provided with an opening and the twin wedge-shaped body lies within the opening, wherein the second beveled surface is an inverted twin wedge-shaped surface at the perimeter of the opening. The inverted twin wedge-shaped surface has twin inclined surfaces. The inverted twin wedge-shaped surface and the surface of the twin wedge-shaped body may be complementary.

In a preferred embodiment, the first beveled surface is the surface of two wedge-shaped bodies, particularly preferably two twin wedge-shaped bodies. Preferably the two wedge-shaped (or two twin wedge-shaped bodies) are polarised at or near to the perimeter of the underside of the supporting bracket. Preferably the magnetic conducting body is provided with an opening and the two wedge-shaped (or twin wedge-shaped) bodies lie within the opening, wherein the second beveled surface is two inverted wedge-shaped surfaces (or two inverted twin wedge-shaped surfaces) polarised at the perimeter of the opening.

Typically the twin wedge-shaped body is a truncated rectangular pyramidal body. Preferably the twin wedge-shaped body is a truncated rectangular pyramidal shell (*ie* is a hollow body). The inverted twin wedge-shaped surface may have an inverted truncated rectangular pyramidal profile.

The supporting bracket may be a substantially planar member of any convenient shaped with a substantially central aperture for receiving the shaft. At least a part of the perimeter of the upperside of the supporting bracket may each be provided with a lip to confine the friction sheet. Typically the supporting bracket is a rectangular planar member. Preferably the two longer edges of the upperside of the rectangular supporting bracket may each be provided with a lip to confine the friction sheet. Where the first beveled surface is the surface of a wedge-shaped body, the wedge-shaped body may be fixed (*eg* welded) to the supporting bracket or the wedge shaped body and the supporting bracket may be integrated. In the latter case, the integrated supporting bracket and wedge-shaped body may be formed by punching.

The friction sheet may be one or more pieces of a suitable material. The friction sheet may be mounted at or near to the end of the upperside of the supporting bracket. Typically the friction sheet is twin pieces disposed at opposing ends of the upperside of the supporting bracket.

The magnetic conducting body may be inserted in or fixed (*eg* welded) to the stator.

The present invention will now be described in a non-limitative sense with reference to the accompanying Figures in which:
FIG. 1 shows a mainly sectional view of an embodiment of the present invention;
FIG. 2 shows a side view from direction A in FIG. 1;
FIG. 3 shows a bottom perspective view of the supporting bracket of the preferred embodiment;
FIG. 4 shows a top perspective view of the supporting bracket of the preferred embodiment; and
FIG. 5 shows an exploded view of a part of the embodiment of the present invention.

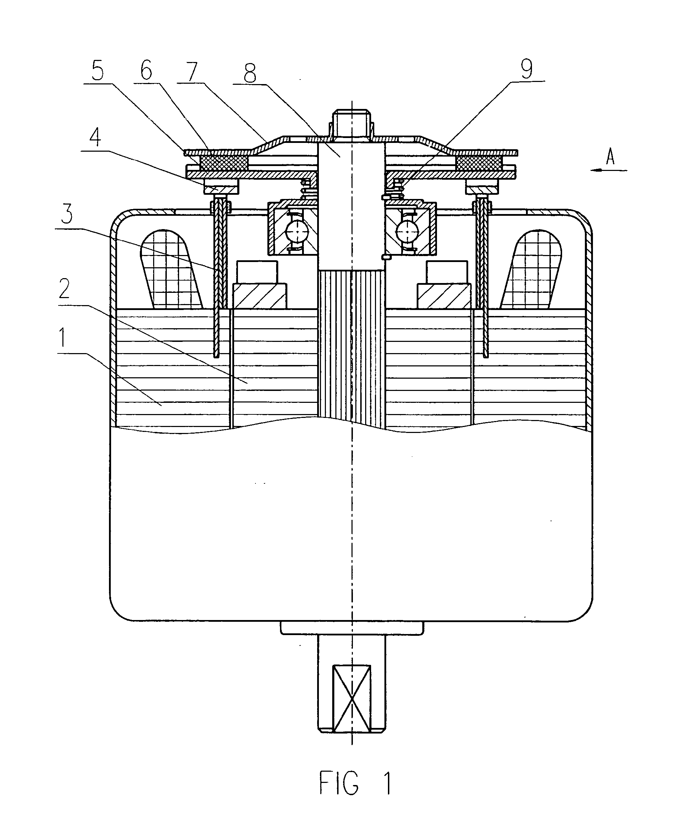

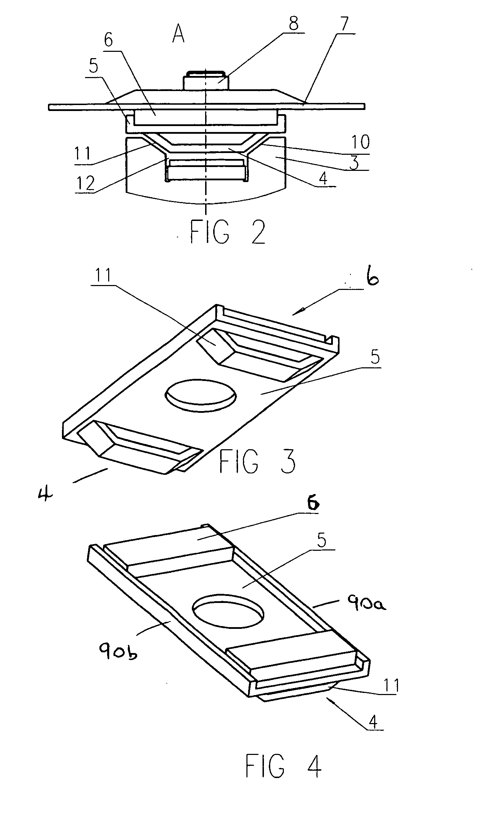

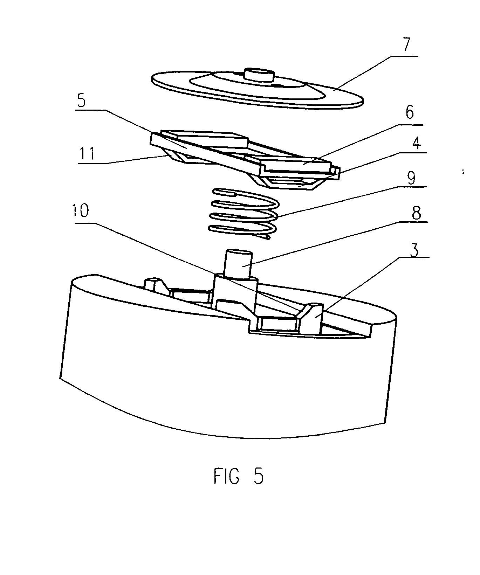

In Figures 1, 2 and 5 is illustrated various views of an electric motor being an embodiment of the invention for automatic braking after power turn-off. The electric motor comprises a stator 1, a rotor 2, a shaft 8 provided on the rotor 2 and a braking disc 7 mounted on the end of the shaft 8. A supporting bracket 5 of rectangular profile (see Figures 3 and 4) rings the exterior of the shaft 8 and a friction sheet 6 is mounted on opposing ends of the upperside of the supporting bracket 5 facing the braking disc 7. Retaining lips 90a, 90b confine the friction sheet 6 to the upperside of the supporting bracket 5. A spring 9 is provided between the supporting bracket 5 and the fixed housing of the electric motor.

On the underside of the supporting bracket 5 are two twin wedge-shaped bodies 4 with a truncated rectangular pyramidal profile. The twin wedge-shaped bodies 4 define a first beveled surface with inclines (one of which is designated numeral 11).

A magnetic conducting body 3 is mounted on the stator 1 extending outwardly in an axial direction. The magnetic conducting body 3 is provided with an opening 12 in which the twin wedge-shaped bodies 4 are seated. The magnetic conducting body 3 is provided at its exterior end with a second beveled surface with inclines (one of which is designated with numeral 10). The second beveled surface is two inverted twin wedge-shaped surfaces polarised at the perimeter of the opening. The two inverted twin wedge-shaped surfaces are complementary to the two twin wedge-shaped bodies 4. For example, incline 11 of the first beveled surface and incline 10 of the second beveled surface are coincident. The engagement between the incline 11 of the first beveled surface and the incline 10 of the second beveled surface causes the twin wedge-shaped bodies 4 to move in an axial direction in response to a tendency to rotate caused by the supporting bracket 5 engaging the rotating braking disc.

## Claims

1. An electric motor for automatic braking after an interruption in power comprising:
a housing,
a stator [1] mounted within the housing,
a rotor [2] mounted within the housing,
a shaft [8] mounted on the rotor [2],
a braking disc [7] mounted at or near to the end of the shaft [8],
a supporting bracket [5] ringing the exterior of the shaft [8],
a friction sheet [6] mounted on the upperside of the supporting bracket [5] facing the braking disc [7],
a spring [9] mounted between the supporting bracket [5] and the housing,
a magnetic conducting body [3] extending outwardly in an axial direction from the stator [1], **characterized in that** the electric motor further comprises:
a first beveled surface on the underside of the supporting bracket [5] and
a second beveled surface on the magnetic conducting body [3], wherein at least one incline [11] of the first beveled surface and at least one incline [10] of the second beveled surface are coincidental.

2. An electric motor as claimed in claim 1 where the incline [11] of the first beveled surface and the incline [10] of the second beveled surface are at least in part upwardly coincidental in the direction of rotation.

3. An electric motor as claimed in claim 1 or 2 wherein the first beveled surface is the surface of a wedge-shaped body [4].

4. An electric motor as claimed in claim 3 wherein the wedge-shaped body [4] is disposed at or near to the perimeter of the underside of the supporting bracket [5].

5. An electric motor as claimed in claim 3 or 4 wherein the magnetic conducting body [3] is provided with an opening and the wedge-shaped body [4] lies within the opening, wherein the second beveled surface is an inverted wedge-shaped surface at the perimeter of the opening.

6. An electric motor as claimed in claim 5 wherein the inverted wedge-shaped surface and the surface of the wedge-shaped body [4] are complementary.

7. An electric motor as claimed in claim 1 or 2 wherein the first beveled surface is the surface of a twin wedge-shaped body [4].

8. An electric motor as claimed in claim 7 wherein the twin wedge-shaped body [4] has twin inclined surfaces.

9. An electric motor as claimed in claim 7 or 8 wherein the twin wedge-shaped body [4] is disposed at or near to the perimeter of the underside of the supporting bracket [5].

10. An electric motor as claimed in claim 7, 8 or 9 wherein the magnetic conducting body [3] is provided with an opening and the twin wedge-shaped body [4] lies within the opening, wherein the second beveled surface is an inverted twin wedge-shaped surface at the perimeter of the opening.

11. An electric motor as claimed in claim 10 wherein the inverted twin wedge-shaped surface has twin inclined surfaces.

12. An electric motor as claimed in claim 10 or 11 wherein the inverted twin wedge-shaped surface and the surface of the twin wedge-shaped body [4] are complementary.

13. An electric motor as claimed in any preceding claim wherein the first beveled surface is the surface of two wedge-shaped bodies [4].

14. An electric motor as claimed in claim 13 wherein the first beveled surface is the surface of two twin wedge-shaped bodies [4].

15. An electric motor as claimed in claim 13 or 14 wherein the two wedge-shaped bodies [4] are polarised at or near to the perimeter of the underside of the supporting bracket [5].

16. An electric motor as claimed in any of claims 7 to 15 wherein the twin wedge-shaped body [4] is a truncated rectangular pyramidal body.

17. An electric motor as claimed in claim 16 wherein the twin wedge-shaped body [4] is a truncated rectangular pyramidal shell.

18. A wedge-shaped body or twin wedge-shaped body [4] as defined in any preceding claim.

## Patentansprüche

1. Elektromotor zum automatischen Bremsen nach einer Stromunterbrechung, umfassend:
ein Gehäuse,
einen Stator (1), welcher in dem Gehäuse angebracht ist,
einen Rotor (2), welcher in dem Gehäuse angebracht ist,
eine Welle (8), welche an dem Rotor (2) angebracht ist,
eine Bremsscheibe (7), welche an oder nahe an dem Ende der Welle (8) angebracht ist,
eine Stützhalterung (5), welche das Äußere der Welle (8) umgibt,
eine Reibungsplatte (6), welche an der Oberseite der Stützhalterung (5) gegenüberliegend der Bremsscheibe (7) angebracht ist,
eine Feder (9), welche zwischen der Stützhalterung (5) und dem Gehäuse angebracht ist,
einen magnetisch leitenden Körper (3), welcher sich in einer axialen Richtung von dem Stator (1) nach außen erstreckt, **dadurch gekennzeichnet, dass** der Elektromotor weiterhin umfasst:
eine erste abgeschrägte Oberfläche an der Unterseite der Stützhalterung (5) und
eine zweite abgeschrägte Oberfläche an dem magnetisch leitenden Körper (3), wobei wenigstens eine Neigung (11) der ersten abgeschrägten Oberfläche und wenigstens eine Neigung (10) der zweiten abgeschrägten Oberfläche zusammenfallen.

2. Elektromotor nach Anspruch 1, wobei die Neigung (11) der ersten abgeschrägten Oberfläche und die Neigung (10) der zweiten abgeschrägten Oberfläche in der Drehrichtung wenigstens teilweise nach oben zusammenfallen.

3. Elektromotor nach Anspruch 1 oder 2, wobei die erste abgeschrägte Oberfläche die Oberfläche eines keilförmigen Körpers (4) ist.

4. Elektromotor nach Anspruch 3, wobei der keilförmige Körper (4) an oder nahe an dem Umfang der Unterseite der Stützhalterung (5) angeordnet ist.

5. Elektromotor nach Anspruch 3 oder 4, wobei an dem magnetisch leitenden Körper (3) eine Öffnung vorgesehen ist und wobei der keilförmige Körper (4) in der Öffnung liegt, wobei die zweite abgeschrägte Oberfläche eine umgekehrte keilförmige Oberfläche an dem Umfang der Öffnung ist.

6. Elektromotor nach Anspruch 5, wobei die umgekehrte keilförmige Oberfläche und die Oberfläche des keilförmigen Körpers (4) komplementär sind.

7. Elektromotor nach Anspruch 1 oder 2, wobei die erste abgeschrägte Oberfläche die Oberfläche eines doppelkeilförmigen Körpers (4) ist.

8. Elektromotor nach Anspruch 7, wobei der doppelkeilförmige Körper (4) Doppelschrägflächen aufweist.

9. Elektromotor nach Anspruch 7 oder 8, wobei der doppelkeilförmige Körper (4) an oder nahe an dem Umfang der Unterseite der Stützhalterung (5) angeordnet ist.

10. Elektromotor nach Anspruch 7, 8 oder 9, wobei an dem magnetisch leitenden Körper (3) eine Öffnung vorgesehen ist und wobei der doppelkeilförmige Körper (4) in der Öffnung liegt, wobei die zweite abgeschrägte Oberfläche eine umgekehrte doppelkeilförmige Oberfläche an dem Umfang der Öffnung ist.

11. Elektromotor nach Anspruch 10, wobei die umgekehrte doppelkeilförmige Oberfläche Doppelschrägflächen aufweist.

12. Elektromotor nach Anspruch 10 oder 11, wobei die umgekehrte doppelkeilförmige Oberfläche und die Oberfläche des doppelkeilförmigen Körpers (4) komplementär sind.

13. Elektromotor nach einem der vorhergehenden Ansprüche, wobei die erste abgeschrägte Oberfläche die Oberfläche von zwei keilförmigen Körpern (4) ist.

14. Elektromotor nach Anspruch 13, wobei die erste abgeschrägte Oberfläche die Oberfläche von zwei doppelkeilförmigen Körpern (4) ist.

15. Elektromotor nach Anspruch 13 oder 14, wobei die zwei keilförmigen Körper (4) an oder nahe an dem Umfang der Unterseite der Stützhalterung (5) polarisiert sind.

16. Elektromotor nach einem der Ansprüche 7-15, wobei der doppelkeilförmige Körper (4) ein abgeschnittener Rechteckpyramidenkörper ist.

17. Elektromotor nach Anspruch 16, wobei der doppelkeilförmige Körper (4) eine abgeschnittene Rechteckpyramidenhülle ist.

18. Keilförmiger Körper oder doppelkeilförmiger Körper (4), wie er in einem der vorhergehenden Ansprüche definiert ist.

## Revendications

1. Moteur électrique destiné à un freinage automatique après une interruption d'énergie comprenant :
un carter,
un stator [1] monté à l'intérieur du carter,
un rotor [2] monté à l'intérieur du carter,
un axe [8] monté sur le rotor [2],
un disque de freinage [7] monté au niveau de l'extrémité de l'axe [8] ou à proximité de celle-ci,
un support d'appui [5] entourant la partie extérieure de l'axe [8],
une couche de friction [6] montée sur la face supérieure du support d'appui [5] faisant face au disque de freinage [7],
un ressort [9] monté entre le support d'appui [5] et le carter,
un corps magnétique conducteur [3] s'étendant vers l'extérieur dans une direction axiale à partir du stator [1], **caractérisé en ce que** le moteur électrique comprend en outre :
une première surface biseautée sur la face inférieure du support d'appui [5] et
une seconde surface biseautée sur le corps magnétique conducteur [3], dans laquelle au moins un plan incliné [11] de la première surface biseautée et au moins un plan incliné [10] de la seconde surface biseautée coïncident.

2. Moteur électrique selon la revendication 1 où le plan incliné [11] de la première surface biseautée et le plan incliné [10] de la seconde surface inclinée coïncident au moins en partie vers le haut dans la direction de rotation.

3. Moteur électrique selon la revendication 1 ou 2, dans lequel la première surface biseautée est la surface d'un corps en forme de coin [4].

4. Moteur électrique selon la revendication 3, dans lequel le corps en forme de coin [4] est placé au niveau du périmètre de la face inférieure du support d'appui [5] ou à proximité de celui-ci.

5. Moteur électrique selon la revendication 3 ou 4, dans lequel le corps magnétique conducteur [3] est muni d'une ouverture et où le corps en forme de coin [4] réside à l'intérieur de cette ouverture, où la seconde surface biseautée est une surface en forme de coin inversé au niveau du périmètre de l'ouverture.

6. Moteur électrique selon la revendication 5, dans lequel la surface en forme de coin inversé et la surface du corps en forme de coin [4] sont complémentaires.

7. Moteur électrique selon la revendication 1 ou 2, dans lequel la première surface biseautée est la surface d'un corps en forme de coin double [4].

8. Moteur électrique selon la revendication 7, dans lequel le corps en forme de coin double [4] présente des surfaces inclinées jumelles.

9. Moteur électrique selon la revendication 7 ou 8, dans lequel le corps en forme de coin double [4] est placé au niveau du périmètre de la face inférieure du support d'appui [5] ou à proximité de celui-ci.

10. Moteur électrique selon la revendication 7, 8 ou 9, dans lequel le corps magnétique conducteur [3] est muni d'une ouverture et où le corps en forme de coin double [4] réside à l'intérieur de l'ouverture, où la seconde surface biseautée est une surface en forme de coin double inversé au niveau du périmètre de l'ouverture.

11. Moteur électrique selon la revendication 10, dans lequel la surface en forme de coin double inversé comporte des surfaces inclinées jumelles.

12. Moteur électrique selon la revendication 10 ou 11, dans lequel la surface en forme de coin double inversé et la surface du corps en forme de coin double [4] sont complémentaires.

13. Moteur électrique selon l'une quelconque des revendications précédentes, dans lequel la première surface biseautée est la surface de deux corps en forme de coin [4].

14. Moteur électrique selon la revendication 13, dans lequel la première surface biseautée est la surface des deux corps en forme de coin double [4].

15. Moteur électrique selon la revendication 13 ou 14, dans lequel les deux corps en forme de coin [4] sont polarisés au niveau du périmètre de la face inférieure du support d'appui [5] ou à proximité de celui-ci.

16. Moteur électrique selon l'une quelconque des revendications 7 à 15, dans lequel le corps en forme de coin double [4] est un corps pyramidal rectangulaire tronqué.

17. Moteur électrique selon la revendication 16, dans lequel le corps en forme de coin double [4] est une coque pyramidale rectangulaire tronquée.

18. Corps en forme de coin ou corps en forme de coin double [4] tel que défini dans l'une quelconque des revendications précédentes.
